# EUROPEAN PATENT APPLICATION

(11) **EP 4 807 568 A1**
(43) Date of publication of application: **16.09.2026**
(21) Application number: 26164326.6
(22) Date of filing: 12.03.2026
(51) Int. Cl.: G06F 13/12, G06F 13/38, G06F 13/42, H04L 41/0681, H04L 41/069, H04L 41/344, H04L 43/04, H04L 43/062, H04L 43/0876, G06F 11/30, G06F 11/34, G06F 13/40

(54) **PERFORMANCE AND EVENT MONITORING FOR A PERIPHERAL INTERCONNECT**

(30) Priority: 14.03.2025 US 202519080489
(71) Applicant: Avago Technologies International Sales Pte. Limited, Singapore 768923 (SG)
(72) Inventor: Tian, Long, Sunnyvale, 94087 (US); Narayanaswamy, Prashanth, Fremont, 94539 (US); Paulsamy, Venkatesh Kumar, Mountain View, 94040 (US)
(74) Representative: Dilg, Haeusler, Schindelmann Patentanwaltsgesellschaft mbH

(57) **Abstract**

An example computing system includes: a compute node having a central processing unit, CPU, (12) and a memory (14); a first device (20) connected to the compute node through a peripheral interconnect; a switch (16) of the peripheral interconnect having a first port (225U) coupled to the CPU (12) and a second port (225D1) coupled to the first device (20); and a controller (22) coupled to the switch (16) via an out-of-band interconnect (227) with respect to the peripheral interconnect; the controller (22) configured to send a request to monitor the peripheral interconnect to the switch (16) and to read results of monitoring from the switch (16); and the switch (16) configured to monitor the peripheral interconnect in response to the request and store the results of the monitoring.

## Description

### BACKGROUND

An artificial intelligence (AI) server may be a specialized computing system optimized for executing machine learning (ML) applications. Such ML applications can include tasks such as training, inference, or both for ML models (e.g., neural networks and the like). An AI server can include various components, such as central processing units (CPUs), a memory subsystem, hardware accelerators, an interconnect fabric, storage subsystem, networking subsystem, and the like. The CPUs can orchestrate the overall system operation, handle control logic, host an operating system (OS), and manage data input/output (IO) to and from the hardware accelerators and other components. The memory subsystem can include dynamic random-access memory (DRAM), which can store code, intermediate data structures, and data exchanged between the CPUs and other components. The hardware accelerators can perform the bulk of the numerical computations required by ML applications. Hardware accelerators can include graphics processing units (GPUs), application specific integrated circuits (ASICs), field programmable gate arrays (FPGAs), and the like. The interconnect fabric can connect the CPU, memory subsystem, hardware accelerators, storage subsystem, and networking subsystem. The interconnect fabric (also referred to as a peripheral interconnect) can be an interconnect compliant with a Peripheral Component Interconnect Express (PCIe) specification (referred to as a PCIe fabric). A PCIe fabric can include PCIe switches that can fan out the number of PCIe lanes so that multiple hardware accelerators can be attached to the AI server. The storage subsystem can include various storage devices for storing data persistently (e.g., solid state drives (SSDs), hard disk drives (HDDs), and the like). The networking subsystem can connect CPUs, hardware accelerators, the storage subsystem, etc. to a network for communication within the AI server or external to the AI server.

The CPUs, memory subsystem, hardware accelerators, storage subsystem, and networking subsystem can be implemented using different circuit boards, which can be connected by connectors, cables, and the like and disposed in a chassis, rack, or the like. A user may have to address problems in an AI server, such as a decrease in performance of device(s) connected to the PCIe fabric, unexpected disconnection of device(s) from the PCIe fabric, or the like. The user can deploy a PCIe analyzer, which may be a device configured to physically connect to the PCIe fabric and capture and interpret data packets transferred over the PCIe fabric. However, some AI servers may be disposed physically in the chassis or rack in a manner that limits or prevents use of a PCIe analyzer (e.g., limits or prevents the physical connection of a PCIe analyzer to the PCIe fabric). This can affect the user's ability to diagnose problems in the AI server, in particular, the user's ability to determine if the problems are associated with the PCIe fabric.

### SUMMARY

In an embodiment, a computing system can include a compute node having a central processing unit (CPU) and a memory. The computing system can include a first device connected to the compute node through a peripheral interconnect. The computing system can include a switch of the peripheral interconnect having a first port coupled to the CPU and a second port coupled to the first device. The computing system can include a controller coupled to the switch via an out-of-band interconnect with respect to the peripheral interconnect. The controller can be configured to send a request to monitor the peripheral interconnect to the switch and to read results of monitoring from the switch. The switch can be configured to monitor the peripheral interconnect in response to the request and store the results of the monitoring.

In another embodiment, a method of monitoring a peripheral interconnect in a computing system is described. The method can include sending, from a controller to a switch of the peripheral interconnect, a request to monitor the peripheral interconnect. The switch can have a first port coupled to a central processing unit (CPU) of a compute node and a second port coupled to a first device. The controller can be coupled to the switch via an out-of-band interconnect with respect to the peripheral interconnect. The method can include monitoring, by the switch, the peripheral interconnect in response to the request. The method can include storing, by the switch, results of the monitoring. The method can include reading, by the controller, the results of the monitoring from the switch.

In another embodiment, an apparatus can include a switch for a peripheral interconnect. The apparatus can include a first port of the switch configured for coupling to a central processing unit (CPU) of a compute node. The apparatus can include a second port of the switch configured for coupling to a first device of the compute node. The apparatus can include an interface of the switch configured for coupling to a controller via an out-of-band interconnect with respect to the peripheral interconnect. The switch can be configured to receive a request from the controller to monitor the peripheral interconnect, monitor the peripheral interconnect in response to the request, store results of the monitoring, and provide the results as stored to the controller.

### BRIEF DESCRIPTION OF THE DRAWINGS

Fig. 1 is a block diagram depicting a computing system according to embodiments.
Fig. 2 is a block diagram depicting an example of a computing system according to some embodiments.
Fig. 3A is a block diagram depicting a PCIe switch according to some embodiments.
Fig. 3B is a block diagram depicting software in a PCIe switch according to some embodiments.
Fig. 4 is a block diagram depicting an entry in a ring buffer according to some embodiments.
Fig. 5 is a block diagram depicting a controller according to some embodiments.
Fig. 6 is a flow diagram depicting a method of monitoring a PCIe bus according to some embodiments.

### DETAILED DESCRIPTION

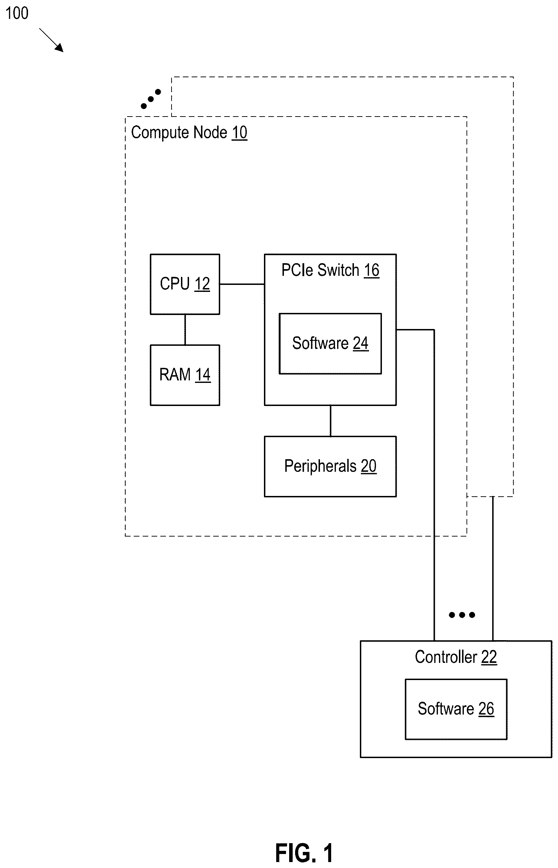

Fig. 1 is a block diagram depicting a computing system 100 according to embodiments. For example, computing system 100 can be an implementation of an AI server discussed above. Computing system 100, however, can have any of a myriad of implementations other than an AI server. Computing system 100 includes one or more compute nodes 10. A compute node may be a computer optimized for executing computing tasks (e.g., AI tasks). Compute node 10 can include one or more central processing units (CPUs) 12, memory (e.g., random-access memory (RAM) 14), a PCIe switch 16, and peripherals 20. CPUs 12 are configured to execute instructions, for example, executable instructions that perform one or more operations described herein, which may be stored in RAM 14. A CPU may be a circuit in a computing system that can perform processing and control functions. Memory may be a circuit in a computing system that can store data. RAM is a well-known type of memory that can store units of data (e.g., bytes), which can be read or changed in any order. A peripheral can be a device that can expand its capabilities of a computing system. Example peripherals 20 can include graphics processing units (GPUs), hardware accelerators, storage devices, network interface controllers (NICs), and other well-known devices.

Peripherals 20 can communicate with each other and/or with CPUs 12 over a bus. A bus may be a subsystem in a computing system (e.g., circuits, connectors, cabling, etc.) that enables transfer of data between components of the computing system. A bus can be compliant a standard specification. The bus may be referred to as a peripheral interconnect (e.g., a peripheral interconnect may be a subsystem in a computing system that enables transfer of data between components of the computing system). A PCIe bus (a PCIe peripheral interconnect) may be a bus compliant with a PCIe specification, various versions of which are well known in the art. A switch on a bus may be a circuit that can enable communication between specific components on the bus. A PCIe switch may be a switch on a PCIe bus and that is compliant with a PCIe specification. CPU 12 can be coupled to peripherals 20 through PCIe switch 16.

Computing system 100 can include a controller 22 coupled to compute nodes 10. A controller may be a circuit configured to monitor, and in some cases control operation of, component(s) of compute nodes 10. Controller 22 can be implemented using a processor. A processor may be a circuit that can perform operations on data. CPUs 12 may be a type of processor, while controller 22 can be another type of processor. A baseboard management controller (BMC) may be a controller that uses well known protocols and interfaces to communicate with components under control. Example protocols and interfaces include Intelligent Platform Management Interface (IPMI), REDFISH, and the like. For example, controller 22 such as a BMC can perform hardware health monitoring, such as tracking sensors (e.g., temperature, voltage, fan speeds, power consumption, etc.), issuing alerts or taking actions if thresholds are exceeded (e.g., ramping up fans, throttling power, etc.), and the like. Controller 22 can allow users to access and control compute nodes 10 remotely (e.g., over a dedicated network port), such as enabling remote power on/off, firmware updates, firmware configuration without direct physical access, and the like. Controller 22 can operate independently of CPUs 12 in compute nodes 10 and the software executing on CPUs 12. As such, controller 22 can continue to function if compute node(s) 10 are not functioning. Controller 22 can execute software 26. Software may be a program or programs that instruct the execution of a processor. Software 26 may be program(s) that instruct the execution of controller 22.

In some embodiments, PCIe switch 16 can execute software 24. That is, software 24 may be program(s) that instruct the execution of a processor in PCIe switch 16. As discussed above, a user may test and diagnose problems in computing system 10, including testing for and diagnosing problems associated with the PCIe bus. However, construction of computing system 100 may be such that use of a PCIe analyzer may be difficult, impractical, or impossible. That is, the user may not be able to physically probe the PCIe bus using a PCIe analyzer. In some embodiments, software 24 of PCIe switch 16 can allow an external management entity, such as controller 22 (e.g., a BMC), to initiate monitoring of the PCIe bus by PCIe switch 16. Software 24 can return data to the external management entity (e.g., controller 22) in response to the monitoring. In some embodiments, the returned data can include performance data, flow control data, or status data, or any combination thereof, as described further below. A user or software can process the returned data, which can help diagnose problems with computing system 100 without relying on an external physical probing device, such as a PCIe analyzer.

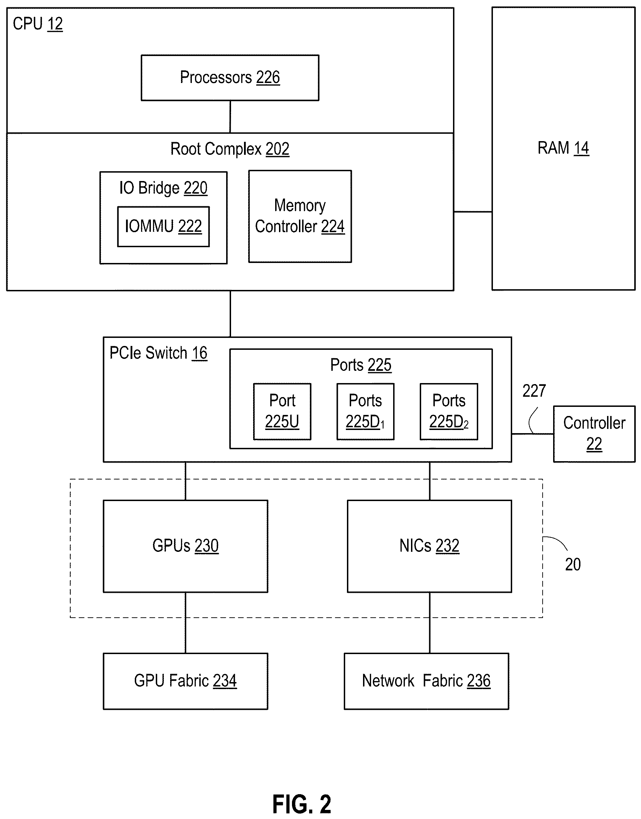

Fig. 2 is a block diagram depicting an example of computing system 100 according to some embodiments. The example shows a CPU 12 coupled to RAM 14 and PCIe switch 16. PCIe switch 16 can include ports 225. A port may be a circuit that enables ingress of data to its device, egress of data from its device, or both ingress and egress. CPU 12 can be coupled to a port 225 (e.g., a port 225U, sometimes referred to as an upstream port). Peripherals 20 can be coupled to ports 225 of PCIe switch 16 (e.g., sometimes referred to as downstream ports). GPUs 230 can be coupled to ports 225D₁ and NICs can be coupled to ports 225D₂. In the example, peripherals 20 can include GPUs 230 and NICs 232. In some examples, GPUs 230 can be coupled to each other through a GPU fabric 234. A GPU fabric may be an interconnect for GPUs. GPU fabric 234 can be independent from the PCIe bus. NICs 232 can be coupled to network fabric 236. A network fabric may be an interconnect for NICs, e.g., an Ethernet network. PCIe switch 16 can be coupled to controller 22 via an out-of-band interconnect 227. An out-of-band interconnect may be an interconnect that is separate and independent from an in-band interconnect. In the example, the PCIe bus can be the in-band interconnect and out-of-band interconnect 227 can be independent of the PCIe bus. Out-of-band interconnect can be, for example, an inter-integrated circuit (I2C) interconnect or the like that are well known in the art. Software 24 of PCIe switch 16 and software 26 of controller 22 are omitted for clarity (shown in Fig. 1).

CPU 12 can be connected to a port 225 of PCIe switch 16 by a root complex 202. CPU 12 includes one or more processors 226 connected to root complex 202 (e.g., processor cores). Root complex 202 comprises circuitry in CPU 12 (or external to CPU or a combination of internal and external circuitry) that functions as a bridge CPU 12 and peripheral devices 20. For example, root complex 202 can include an input/output (IO) bridge 220 and a memory controller 224. IO bridge 220 can include an IO memory management unit (IOMMU) 222. A memory controller 224 can be a circuit that controls a memory (e.g., RAM 14). An IO bridge can be a circuit that enables input/output between its device and other devices (e.g., between CPU 12 and peripherals 20). An MMU may be a circuit that can translate addresses used to access a memory (e.g., virtual addresses in a logical address space to physical addresses of the memory). An IOMMU may be a circuit that translates addresses on a direct-memory access (DMA)-capable bus used to access a memory (e.g., RAM 14, where the PCIe bus is a DMA-capable bus). DMA may be a feature of a computing system that allows a device (e.g., a peripheral 20) to access RAM 14 independent of CPU 12. RAM 14 can include an interface connected to memory controller 224 of root complex 202 (e.g., a double data rate (DDR) parallel interface). Memory controller 224 can handle data transfer between CPU 22 and RAM 24.

In PCIe, lanes can enable data to be transmitted and received between peripherals and the CPU/RAM (or between peripherals, in the case of peer-to-peer communication). A single PCIe lane can include two differential signal pairs: A transmit pair can carry data from a device to its link partner; and a receive pair can carry data in the opposite direction from the transmit pair. Each lane can be a full-duplex (two-way) serial channel, supporting simultaneous bi-directional data transfer. PCIe devices can aggregate multiple lanes in parallel to achieve higher total bandwidth. Designations such as x1, x4, x8 and x16 can indicate the number of lanes bonded together for a single logical link.

In the PCIe protocol stack, data can be encapsulated and transmitted through different protocol layers, each of which can add its own header and control information. Two fundamental packet types in PCIe are Transaction Layer Packet (TLP) and Data Link Layer Packet (DLLP). TLPs can carry actual read/write requests, completions (responses), messages, and configuration commands (e.g., read 64 bytes from address X; write these bytes to address Y). The transaction layer in PCIe can be responsible for assembling TLPs form requests, passing them down through the stack, and receiving completion TLPs in response. A TLP can include a header, optional extensions, a data payload, and a checksum. For example, a memory write TLP can include a target address, a length of data, and the data payload itself. A memory read TLP can include a target address, the length of data to be read, and no payload. A completion TLP can return read data or status in response to a read or configuration request. DLLPs can handle tasks internal to the link operation, such as maintaining flow control, acknowledging or retrying packets, and preforming power management and signaling. The data link layer ensures reliable transmission of TLPs between two endpoints on a single PCIe link. DLLPs can be smaller than TLPs and can include a header/control bytes, a payload (if applicable), and a checksum.

A PCIe switch can function as a multi-port bridge for a PCIe bus, allowing one "upstream" port (connected toward the CPU) to fan out to multiple "downstream" ports (connected to endpoint peripherals such as GPUs, NICs, etc.). Each port-upstream or downstream-can have a certain link width (x1, x4, x8, x16, etc.) that is comprised of physical PCIe lanes. The switch may not arbitrarily redistribute individual lanes among ports once the system is running; rather, the switch can manage, negotiate, and maintain the link widths and speeds for each of its ports, then route transactions appropriately at the packet (transaction) layer. A PCIe switch can recognize addresses and identifiers (IDs), forward packets over the appropriate port, and manage flow control and buffers. For example, inbound TLPs from the upstream port can be examined at the transaction layer and then directed out through the downstream port whose address range matches. Similarly, a peripheral's outbound TLPs flow to the switch, which can route them upstream or to another downstream port (in the case of peer-to-peer transfers) based on routing rules. The switch can track flow control credits for each port (e.g., posted, non-posted, completion traffic). The switch can ensure that no port sends TLPs unless there is buffer space (credit) on the receiving side. PCIe flow control is discussed immediately below.

In PCIe, flow control may be a mechanism that ensures data packets (e.g., TLPs) are not sent faster than a receiver can handle them, preventing buffer overflows and data loss. Unlike some protocols that rely on acknowledgements for each packet, PCIe can use a credit-based system to manage this flow of data. A receiver can advertise credits. Each PCIe device (e.g., the receiver) can allocate a certain number of buffer slots for incoming packets. A credit may be a buffer slot for storing all or a portion of a packet. These credits can be reported to the transmitter during link initialization (and dynamically updated if needed). A transmitter can consume credits. When the transmitter sends a packet, the transmitter can consume one or more of the receiver's available credits (depending on packet size). The transmitter can track these consumed credits and may not send more data than the receiver has signaled it can accept. Credits can be replenished. Once the receiver processes and removes data from its buffer, the receiver can send an update (e.g., via DLLP) to the transmitter indicating that credits are freed up and available again. The transmitter can then resume sending more packets using the newly freed credits.

PCIe can include different types of traffic and credits. Posted (P) packets can be a traffic type where no completion is required from the receiver (e.g., writes to memory). Non-posted (NP) packets can require a completion response from the receiver (e.g., read data). Completion packets can be sent back to a transmitter to fulfill read requests or indicate status. Each traffic type can have its own credit count and a transmitter can maintain enough credits separately for posted, non-posted, and completion traffic.

Computing system 100 can exhibit problems with communication over the PCIe bus for which a user may desire debug. For example, a NIC 232 may receive data from network fabric 236 intended for a GPU 230. In the example, peer-to-peer in PCIe switch 16 between NIC 232 and GPU 230 may be disabled. NIC 232 can use DMA to write the data to RAM 14. CPU 12 can then read the data from RAM 14 and send the data over the PCIe bus to GPU 230. In some cases, credits on the upstream port connected to CPU 12 for posted traffic may not be replenished in time to allow CPU 12 to send the data to GPU 230. This can cause back pressure for NIC 232, which can cause NIC to trigger a flow control mechanism in network fabric 236 (e.g., priority-based flow control (PFC)). This can cause a degradation of performance in computing system 100 for which the user may desire to debug.

In another example, CPU 12 can initiate some memory read/write traffic for GPU 234. GPU 234 may not complete a memory write immediately and subsequent memory read/writes may be queued by PCIe switch 16. This can cause completion timeouts at PCIe switch 16 for the queued memory reads. This can cause a degradation of performance in computing system 100 for which the user may desire to debug.

In another example, PCIe switch 16 can enable peer-to-peer connection between NIC 232 and GPU 230. Credits on the downstream port connected to GPU 230 may not be replenished in time to allow GPU 230 to receive the data from NIC 232. This can cause a degradation of performance in computing system 100 for which the user may desire to debug.

In another example, the link between GPU 230 and the downstream port of PCIe switch 16 can be dropped after some time of being connected (e.g., due to a power issue, temperature issue, etc.). This can cause a degradation of performance in computing system 100 for which the user may desire to debug.

In some embodiments, controller 22 can request PCIe switch 16 to monitor one or more ports 225 over out-of-band interconnect 227. PCIe switch 16 can collect results of the monitoring and store the results in its memory (shown below). Controller 22 can obtain the results of the monitoring from PCIe switch 16 over out-of-band interconnect 227. A user or software can interact with controller 22 to obtain the monitoring results, analyze the results, and perform debugging and diagnosing of problems in computing system 100, such as the example problems described above.

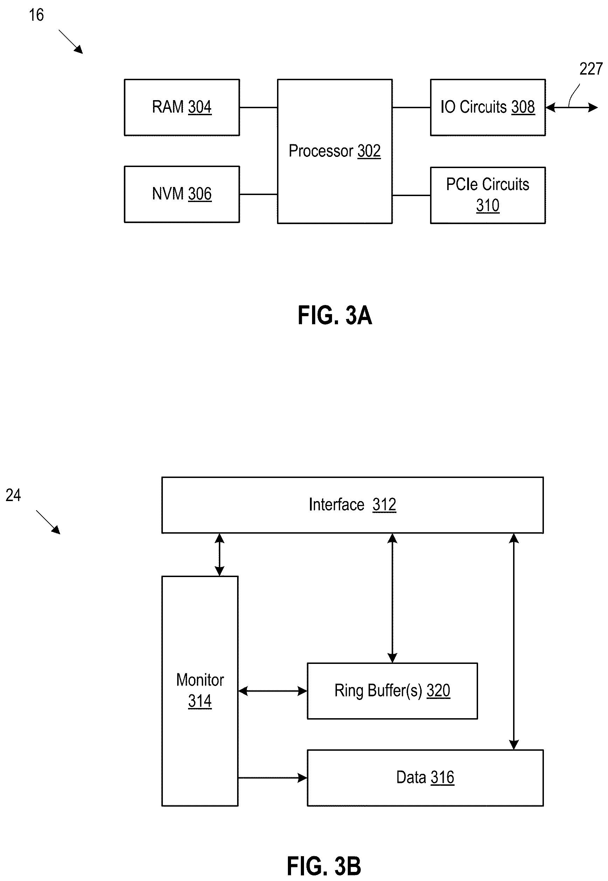

Fig. 3A is a block diagram depicting PCIe switch 16 according to some embodiments. PCIe switch 16 can include a processor 302, RAM 304, a non-volatile memory (NVM) 306, IO circuits 308, and PCIe circuits 310. An NVM may be a memory that can store data persistently (e.g., across power up and power down cycles). IO circuits may be circuits configured to send and receive data (e.g., transmitter and receiver). IO circuits 308 can connect to out-of-band interconnect 227 for communicating with controller 22 (e.g., IO circuits 308 can be I2C circuits or the like). PCIe circuits 310 can include circuits for implementing ports 225 and connections between ports 225. Processor 302 can be coupled to RAM 304, NVM 306, IO circuits 308, and PCIe circuits 310. Processor 302 can execute software 24 (Fig. 1). Software 24 can be stored in RAM 304, NVM 306, or both.

Fig. 3B is a block diagram depicting software 14 according to some embodiments. Software 24 can include an interface 312 and a monitor 314. Interface 312 can be an application programming interface (API) or the like through which an external entity can provide instructions (e.g., controller 22 over out-of-band interconnect 227). Monitor 314 can control PCIe circuits 310 to perform various types of monitoring. Monitor 314 can store data 316 in RAM 304, NVM 306, or both that is generated by PCIe circuits 310 as a result of monitoring. Monitor 314 can also maintain one or more ring buffers 320. A ring buffer may be a data structure that can store entries and keep track of beginning and ending entries. Controller 22 can read entries in ring buffer(s) 320 to obtain results of monitoring.

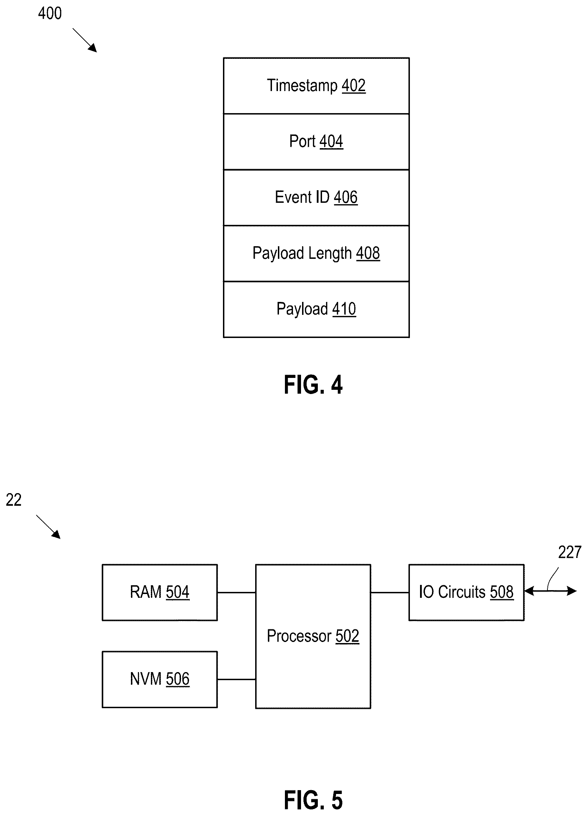

Fig. 4 is a block diagram depicting an entry 400 in a ring buffer 320 according to some embodiments. Entry 400 can include a timestamp 402, a port 404, an event ID 406, a payload length 408, and a payload 410. Timestamp 402 can include data representing time. Port 404 can include data representing an identifier of a port 225. Event ID 406 can include data representing an identifier of an event being monitored. Payload length 408 can include data representing the amount of data in payload 410. Payload 410 can include data collected as a result of monitoring.

Fig. 5 is a block diagram depicting controller 22 according to some embodiments. Controller 22 can include a processor 502, RAM 504, NVM 506, and IO circuits 508. IO circuits 508 can connect to out-of-band interconnect 227 for communicating with PCIe switch 16 (e.g., IO circuits 508 can be I2C circuits or the like). Processor 302 can be coupled to RAM 504, NVM 506, and IO circuits 508. Processor 502 can execute software 26 (Fig. 1). Software 26 can be stored in RAM 504, NVM 506, or both.

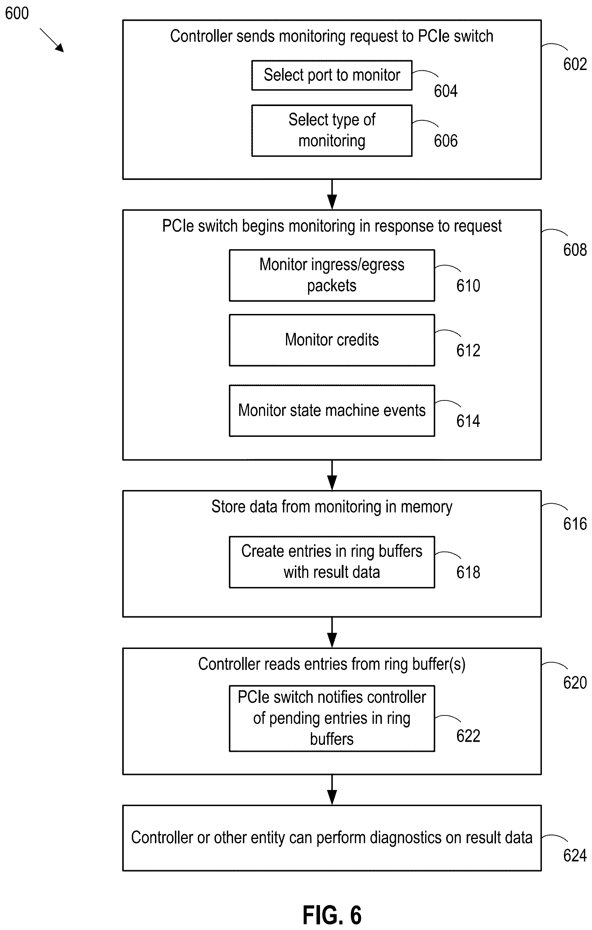

Fig. 6 is a flow diagram depicting a method 600 of monitoring a PCIe bus according to some embodiments. Method 600 can begin at step 602, where controller 22 can send a monitoring request to PCIe switch 16. Controller 22 can send the monitoring request over out-of-band interconnect 227. Controller 22 can invoke interface 312 of software 24 to provide the monitoring request. For example, at step 604, the monitoring request can select a port 225 of PCIe switch 16 to be monitored. At step 606, the monitoring request can select a type of the monitoring (discussed further below).

At step 608, PCIe switch 16 can begin monitoring in response to the monitoring request. Software 24 can invoke monitor 314 to perform the monitoring of PCIe circuits 310. Different types of monitoring can be performed and specified in the request. For example, at step 608, PCIe switch 16 can monitor ingress/egress packets at the specified port. The number of packets, rate of packets, and like type of statistics can be monitored and collected (e.g., performance statistics). At step 612, PCIe switch 16 can monitor credits at the specified port (e.g., transmitter credits, receiver credits, or both). The credits can be of different traffic types, as discussed above (e.g., post credits, non-post credits, completion credits). At step 514, PCIe switch 16 can monitor state machine events at the specified port. For example, a link training and status state machine (LTSSM) can be monitored. An LTSSM is a logic block that configures the physical link between a device and a port (e.g., negotiating link width, speed, equalization settings, etc.). PCIe switch 16 can perform any combination of such monitoring tasks in response to the request.

At step 616, software 24 of PCIe switch 16 can store data resulting from the monitoring in memory (e.g., RAM 304 and/or NVM 306). At step 618, PCIe switch 16 can create entries in ring buffer(s) 320 with result data from monitoring tasks. At step 620, controller 22 can read entries from ring buffer(s) 320 (e.g., through interface 312). In some embodiments, at step 622, PCIe switch 16 can notify controller 22 of pending entries in ring buffer(s) 320 to be read. Alternatively, controller 22 can poll PCIe switch 16 to discover when new entries have been added to ring buffer(s) 320. At step 624, controller 22 or some other entity (a user or software) can perform diagnostics using the result data from the monitoring.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A computing system, comprising:
a compute node having a central processing unit (CPU) and a memory;
a first device connected to the compute node through a peripheral interconnect; a switch of the peripheral interconnect having a first port coupled to the CPU and a second port coupled to the first device; and
a controller coupled to the switch via an out-of-band interconnect with respect to the peripheral interconnect;
the controller configured to send a request to monitor the peripheral interconnect to the switch and to read results of monitoring from the switch; and
the switch configured to monitor the peripheral interconnect in response to the request and store the results of the monitoring.

2. The computing system of claim 1, wherein
the request to monitor the peripheral interconnect identifies a port being one of the first or second ports.

3. The computing system of claim 2, wherein
the switch is configured to monitor ingress or egress traffic from the port.

4. The computing system of claim 2 or 3, wherein
the switch is configured to monitor credits used for flow control at the port.

5. The computing system of claim 2, 3, or 4, wherein
the switch is configured to monitor events of a state machine for the port.

6. The computing system of any one of the claims 1 to 5, wherein
the switch is configured to store the results of the monitoring in entries of a ring buffer, and wherein the controller is configured to read the entries from the ring buffer to read the results of the monitoring.

7. The computing system of any one of the claims 1 to 6, wherein
the peripheral interconnect comprises a PCIe interconnect, wherein the switch comprises a PCIe switch, and wherein the controller comprises a baseboard management controller (BMC).

8. A method of monitoring a peripheral interconnect in a computing system, comprising:
sending, from a controller to a switch of the peripheral interconnect, a request to monitor the peripheral interconnect, the switch having a first port coupled to a central processing unit (CPU) of a compute node and a second port coupled to a first device, the controller coupled to the switch via an out-of-band interconnect with respect to the peripheral interconnect;
monitoring, by the switch, the peripheral interconnect in response to the request;
storing, by the switch, results of the monitoring; and
reading, by the controller, the results of the monitoring from the switch.

9. The method of claim 8, wherein
the request to monitor the peripheral interconnect identifies a port being one of the first port or the second port.

10. The method of claim 9, further comprising at least one of the following features:
(A) the step of monitoring the peripheral interconnect comprises:
monitoring ingress or egress traffic from the port;
(B) the step of monitoring the peripheral interconnect comprises:
monitoring credits used for flow control at the port;
(C) the step of monitoring the peripheral interconnect comprises:
monitoring events of a state machine for the port.

11. The method of claim 8, 9, or 10, wherein the step of storing the results comprises:
storing entries in a ring buffer;
wherein the step of reading the results comprises reading, by the controller, the entries from the ring buffer;
wherein in particular the method further comprises: notifying, by the switch, the controller of the entries in the ring buffer.

12. An apparatus, comprising:
a switch for a peripheral interconnect;
a first port of the switch configured for coupling to a central processing unit (CPU) of a compute node;
a second port of the switch configured for coupling to a first device of the compute node; and
an interface of the switch configured for coupling to a controller via an out-of-band interconnect with respect to the peripheral interconnect;
wherein the switch is configured to receive a request from the controller to monitor the peripheral interconnect, monitor the peripheral interconnect in response to the request, store results of the monitoring, and provide the results as stored to the controller.

13. The apparatus of claim 12, wherein
the request to monitor the peripheral interconnect identifies a port being one of the first or second ports.

14. The apparatus of claim 13, wherein
the switch is configured to monitor ingress or egress traffic from the port; and/or
the switch is configured to monitor credits used for flow control at the port; and/or
the switch is configured to monitor events of a state machine for the port.

15. The apparatus of claim 12, 13 or 14, wherein
the switch is configured to store the results of the monitoring in entries of a ring buffer, and wherein the controller is configured to read the entries from the ring buffer to read the results of the monitoring.
